Europäisches Patentamt

European Patent Office

Office européen des brevets

(11) Publication number: 0 215 946 B1

# EUROPEAN PATENT SPECIFICATION

(45) Date of publication of patent specification: 10.06.92  (51) Int. Cl.5: H04N 7/167

(21) Application number: 86902964.5

(22) Date of filing: 14.03.86

(86) International application number:
PCT/US86/00548

(87) International publication number:
WO 86/05647 (25.09.86 86/21)

(54) TELEVISION SIGNAL SCRAMBLING AND DATA TRANSMISSION SYSTEM.

(30) Priority: 15.03.85 US 711947
15.03.85 US 712949

(43) Date of publication of application:
01.04.87 Bulletin 87/14

(45) Publication of the grant of the patent:
10.06.92 Bulletin 92/24

(84) Designated Contracting States:
DE FR GB IT NL SE

(56) References cited:
GB-A- 2 071 458
US-A- 2 983 781
US-A- 4 467 353

See also references of WO8605647

(73) Proprietor: ZENITH ELECTRONICS CORPORA-
TION
Zenith Center 1000 Milwaukee Avenue
Glenview Illinois 60025(US)

(72) Inventor: CITTA, Richard, W.
739 North Columbian
Oak Park, IL 60302(US)
Inventor: MUTZABAUGH, Dennis, M.
108 N. Waverly Dr.
Mount Prospect, IL 60056(US)
Inventor: SGRIGNOLI, Gary, J.
1139 Juniper Lane
Mount Prospect, IL 60056(US)

(74) Representative: Baillie, Iain Cameron et al
c/o Ladas & Parry, Altheimer Eck 2
W-8000 München 2(DE)

## Description

The present invention relates generally to communication systems for transmitting and receiving data in conjunction with a scrambled broadcast television signal and more particularly concerns the transmission and reception of data in subscription television systems.

In subscription television systems, television signals are typically transmitted to system subscribers in a scrambled form either along a coaxial cable or as an "over-the-air" broadcast. Each system subscriber is provided with a decoder operable for unscrambling the transmitted television signal and for supplying the unscrambled signal to a conventional television receiver for viewing. In addition, many present-day subscription television systems are addressable in nature whereby the operation of individual decoders may be selectively controlled through the transmission of system control data generated at the system head-end. The system control data may include such information as subscriber address codes, subscriber authorization codes, program codes and the like enabling the system operator to designate different levels or tiers of programming authorized for different individual subscribers.

Various techniques are known in the industry for transmitting such system control data in conjunction with a television signal. These known techniques, however, are normally limited in the amount of data which can be transmitted in a reasonable time frame and typically require the use of relatively complex and therefore expensive data encoding and decoding apparatus.

Patent US-A-4,467,353 to Citta et al, commonly owned by Zenith Electronics Corporation, discloses a television signal scrambling system encoding a television signal by suppressing the amplitude and changing the phase of the television signal carrier during selected horizontal blanking intervals. Encoding intervals therein are defined with a single width.

It is therefore a general object of the present invention to provide an improved technique for transmitting data in conjunction with a broadcast television signal.

The present invention therefore provides a television signal encoding and data transmission system including means for developing an RF television signal having an amplitude modulated RF video component and a frequency modulated RF audio component, means for encoding said RF television signal, means for transmitting said encoded RF television signal, means for receiving said transmitted signal, phase modulation detection means, and decoding means for restoring said television signal, said system characterized by means for defining, during each horizontal blanking interval, an encoding interval having a first width or a second width, respectively representing different states of a data bit, each of said encoding intervals including at least the horizontal sync pulse and color burst of the respective horizontal blanking interval; said encoding means incorporating means for varying the amplitude and altering the phase of said RF television signal during said encoding intervals according to respective predetermined functions that vary with frequency between the carrier frequencies of said video and audio components so as to scramble said video component; said phase modulation detection means responsive to said received signals for detecting said width modulated encoding intervals; and said decoding means responsive to said detected intervals and having amplitude and phase response characteristics complementary to said respective predetermined functions for restoring said RF television signal; and pulse width discriminator means responsive to said detected width modulated encoding intervals for deriving said bits in terms of said differed logic states.

The present invention also relates to a receiver for processing an encoded RF television signal having an RF video component whose amplitude and phase are altered during a plurality of encoding intervals according to respective first and second functions that vary with frequency between the carrier frequencies of the video and audio components of said RF television signal, said receiver including means for receiving said encoded television signal, phase modulation detection means, and decoding means for restoring said RF television signal, characterized by said pulse modulation detection means responsive to said received signal for detecting said encoding intervals having a first width or a second width respectively representing complementary states of a data bit and each including at least the horizontal sync pulse and color burst of a respective horizontal blanking interval; said decoding means responsive to said detected intervals and having amplitude and phase response characteristics respectively comprising the complements of said first and second functions for decoding said RF television signal; and pulse width discriminator means responsive to said detected width modulated encoding intervals for deriving said data bits in terms of said complementary logic states. One of the features of the invention resides in providing a subscription television data transmission system capable of transmitting relatively large amounts of data in conjunction with a broadcast television signal yet requiring the use of relatively non-complex and inexpensive data encoding and decoding apparatus.

Further features and advantages of the invention will become more evident by reference to the following description of preferred embodiments of the invention taken in conjunction with the accompanying drawings in which:

Figure 1 is a block diagram of a television signal transmitter according to the invention;

Figures 2A and 2B are waveform diagrams illustrating a standard NTSC RF television signal and the detected video envelope thereof;

Figures 3A-3B and 4A-4B are waveform diagrams illustrating the manner in which the NTSC signal of Figure 2A is modified according to the invention and the corresponding control signals produced in response thereto;

Figures 5A-5B and 6A-6B illustrate the amplitude and normalized phase versus frequency response characteristics of the SAW filters utilized in the transmitter and receiver of the invention;

Figure 7 is a block diagram showing a decoder operable in response to transmitted data of the type represented in Figures 3A and 4A; and

Figures 8 and 9 are block diagrams of alternate embodiments of the transmitter and decoder of the invention.

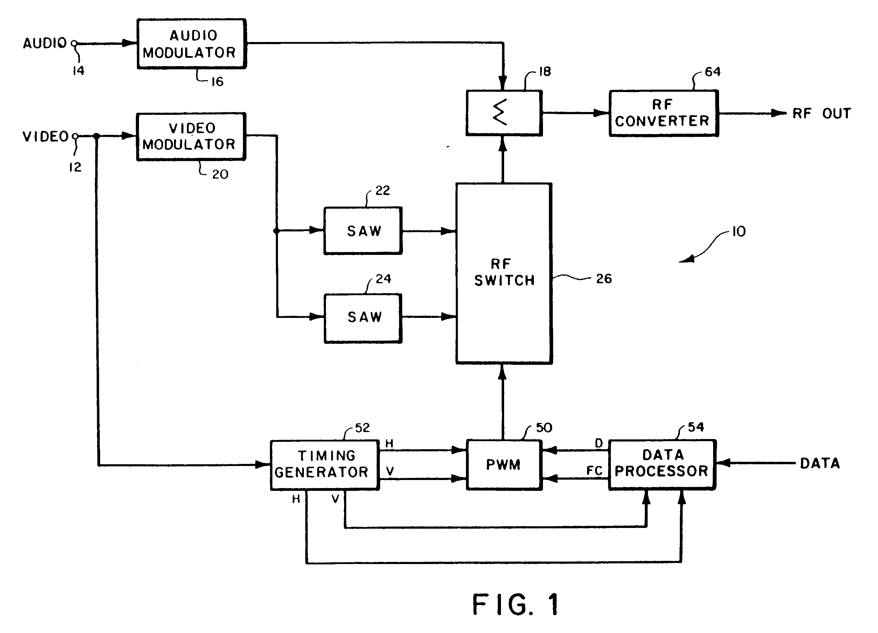

Referring now to the drawings, Figure 1 is a simplified block diagram illustrating a headend television signal scrambler and data encoder 10 according to the present invention. It will be understood that the signals provided by scrambler and data encoder 10 are intended to be broadcast for transmission through a suitable medium such as a coaxial cable in a CATV system for reception by the system subscribers. Each system subscriber is provided with a decoder which may be authorized for unscrambling a particular broadcast television program in response to data signals received from headend unit 10. Thus, with relation to a particular television program, an authorized subscriber will be provided with an unscrambled video image for viewing while all unauthorized parties, whether system subscribers or not, will be provided with a television signal producing a scrambled video image which is largely unintelligible when displayed on a conventional television receiver viewing screen.

With more particular reference to Figure 1, a conventional NTSC composite baseband video signal is coupled to an input terminal 12 of headend unit 10 with the associated audio baseband signal being applied to an input terminal 14. The audio baseband signal is coupled to an audio modulator 16 where it is used to frequency modulate a sound intermediate frequency (IF) carrier, typically 41.25 MHz, which is then applied to one input of a summing circuit 18. The composite baseband video signal is coupled to a video modulator 20 where it is used to amplitude modulate a video IF carrier spaced 4.5 MHz from the sound IF carrier, i.e., 45.75 MHz. The IF video signal developed at the output of modulator 20 is applied to the inputs of a pair of filters which, in a preferred embodiment of the invention, comprise surface acoustic wave (SAW) filters 22 and 24. The outputs of SAW filters 22 and 24 are selectively coupled by an RF switch 26 to a second input of summing circuit 18. As will be explained in further detail hereinafter, the frequency response characteristics of SAW filters 22 and 24 together with the operation of RF switch 26 provide for the implementation of the novel television signal scrambling and data encoding techniques of the invention.

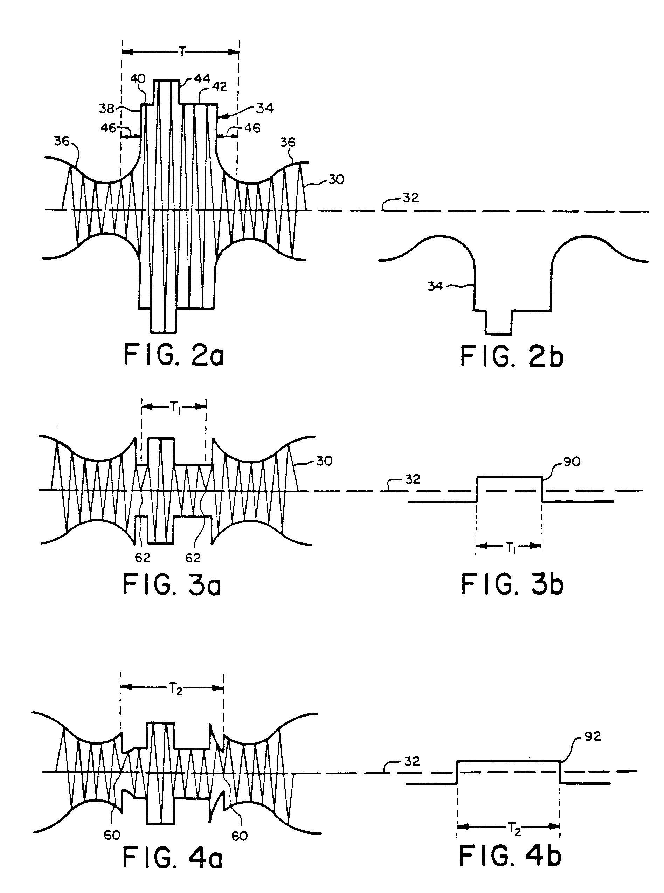

More particularly, Figure 2A illustrates a standard NTSC television signal of the type developed at the output of video modulator 20. The signal comprises an IF carrier 30, having a substantially fixed phase characteristic and a zero carrier level 32, amplitude modulated by a composite baseband video signal 34. Composite baseband video signal 34 comprises a plurality of horizontal trace lines 36 defining the video image, the horizontal trace lines being separated by a plurality of horizontal blanking pulses 38. Each horizontal blanking pulse includes a front porch 40 and a back porch 42, the latter typically including a 3.58 MHz reference color burst signal (not shown). Each horizontal blanking pulse, which defines a horizontal blanking interval, also includes a horizontal synchronization pulse 44 between front porch 40 and back porch 42. The horizontal synchronization pulses 44 are used to synchronize the horizontal deflection circuits of a television receiver for initiating horizontal retrace at the proper times, the viewing screen of the receiver being blanked during such retrace intervals by the horizontal blanking pulses 38.

According to NTSC standards, each horizontal blanking pulse 38 has a duration of about 12 microseconds with front porch 40 comprising about 1.3 microseconds, horizontal sync pulse 44 about 5.0 microseconds and back porch 42 about 5.7 microseconds. In addition, due to the arrangement of the escutcheon in relation to the viewing screen of the receiver, a non-viewable, overscan interval 46 of about 1.5 microseconds is normally established at the beginning and end of each horizontal trace line 36 immediately adjacent blanking pulse 38.

When received by a normal television receiver, the signal of Figure 2A is detected to reproduce composite baseband video signal 34 as illustrated by the waveform of Figure 2B. This detection process is typically effected by a diode-type envelope detector which will, as its name suggests, detect the envelope amplitude modulating the carrier signal 30 regardless of its phase. The polarity of the detected signal in relation to the zero carrier level 32 is determined by the polarity of the detecting diode in the receiver circuitry. As illustrated in Figure 2B, detected composite baseband video signal 34 has a negative polarity with relation to the zero carrier level 32 with black level signals being more negative than white level signals.

Figures 3A and 4A illustrate how the television signal of Figure 2A is modified by headend unit 10 to achieve the scrambling and data encoding effects of the invention. In particular, it will be observed that the signal is suppressed below most video levels and the phase characteristic of the carrier signal 30 is changed during an encoding interval centered about each horizontal blanking pulse 38, the encoding interval having a maximum duration T (see Figure 2A) defined by the limits of the overscan intervals 46 on either side thereof.

Thus, in Figure 3A, the signal is suppressed in amplitude and the phase of carrier 30 is changed during an encoding interval T1 slightly less than the width of horizontal blanking pulse 38 while in Figure 4A, amplitude suppression and carrier phase change are effected during a wider encoding interval T2 extending about one microsecond into the respective overscan intervals 46 on either side of horizontal blanking pulse 38. The amplitude suppression and carrier phase alteration imposed on the television signal during the encoding intervals serves to effectively scramble the signal while the width modulation of the encoding intervals provides a facility for the in-band transmission of data.

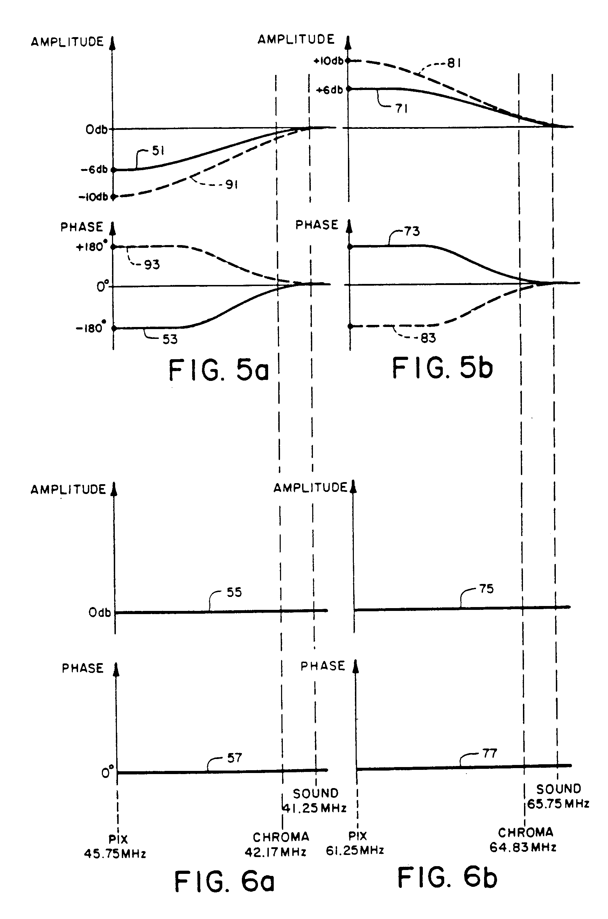

Referring back to Figure 1, the foregoing techniques are essentially implemented by SAW filters 22 and 24 in combination with the operation of RF switch 26. SAW filter 22, which may have a delay of about 700 nanoseconds, is designed to exhibit amplitude and normalized phase versus frequency response characteristics as shown by the solid line curves 51 and 53 in Figure 5A. As used herein, the phrase normalized phase versus frequency response means the phase versus frequency response of a particular filter relative to the phase versus frequency response of a true delay line of the same length; i.e., the difference between the phase versus frequency response characteristics of the filter and a true delay line of the same length. It will be noted that the amplitude response 51 varies from about -6 db at the picture IF of 45.75 MHz and gradually approaches nearly 0 db at the sound IF frequency of 41.25 MHz, with a small negative offset at the chroma IF frequency of 42.17 MHz. Similarly, the normalized phase response 53 varies from about -180 degrees at the picture IF and gradually approaches 0 degrees at the sound IF frequency with a small negative offset, preferably about 15 degrees, at the chroma IF frequency. SAW filter 24, which has a delay matched or equal to the delay of filter 22, is characterized by substantially flat amplitude and normalized phase versus frequency responses 55 and 57 at 0 db and 0 degrees respectively between the picture and sound IF frequencies as shown in Figure 6A. Alternatively, the flat responses 55 and 57 could be offset to selected small, non-zero values.

RF switch 26 is operated in response to a pulse width modulator 50 which provides a horizontal rate output defining the width of each encoding interval. The system is operated with two different width encoding intervals T1 and T2 representing the complementary states of a respective data bit. Thus, the relatively wide encoding interval T2 shown in Figure 4A may represent a logic "1" data bit while the narrower encoding interval T1 of Figure 3A may represent a logic "0" data bit. Pulse width modulator 50, in response to horizontal and vertical rate timing signals supplied by a timing generator 52, couples a horizontal rate pulse width modulated signal defining the wider and narrower encoding intervals T1 and T2 to RF switch 26 in accordance with a data signal supplied by a data processor 54. That is, if a particular bit of the data signal supplied by data processor 54 is at a logic "1" level, a pulse defining the wider encoding interval T2 of Figure 4A would be provided to RF switch 26 by modulator 50 whereas a pulse defining the narrower encoding interval T1 of Figure 3A would be provided if the data bit was at a logic "0" level.

RF switch 26 is operative for coupling only the output of SAW filter 24 (Figure 6A) to summing circuit 18 at all times except during an encoding interval T1 or T2 as defined by the output of pulse width modulator 50. During an encoding interval T1 or T2 only the output of SAW filter 22 (Figure 5A) is coupled to the summing circuit. As a result, during each encoding interval T1 or T2 the IF signal coupled to summing circuit 18 by RF switch 26 is modified by the amplitude and normalized phase versus frequency response characteristics of SAW filter 22 (Figure 5A) to produce the scrambled and data encoded signals of Figures 3A and 4A. In particular, signal scrambling is effected by suppressing the amplitude and altering the phase of the IF signal in accordance with the amplitude and normalized phase response characteristics 51 and 53 during the encoding intervals and data transmission is effected by modulating the width of the encoding interval between the two values T1 and T2 in accordance with the data signal supplied by data processor 54.

Since, as noted in Figure 5A, both the attenuation and phase change imposed on the IF signal by SAW filter 22 continuously vary between the picture IF carrier (-6 db and -180 degrees respectively) and the sound IF carrier (substantially zero db and zero degrees), different frequency components of the signal will be subjected to varying degrees of attenuation and phase shift. For example, due to the 180 degree phase shift imposed on the signal at the picture IF carrier frequency, during the encoding interval the 3.58 MHz reference chroma burst will be detected by a conventional intercarrier receiver at nearly the opposite polarity in relation to an unencoded reference chroma burst. The use of this opposite polarity reference chroma burst to decode the color information in the video signal will result in the production of colors which are nearly the complements of the transmitted chroma information thereby further enhancing signal scrambling. Similarly, an intercarrier receiver will couple a 4.5 MHz intercarrier sound signal having the wrong polarity to the sound circuits of the receiver during the encoding intervals resulting in the production of a distorted audio signal.

As mentioned previously, the width of the encoding intervals defined by the output of pulse width modulator 50 are modulated between two values T1 and T2 in accordance with the data signal supplied to the modulator by data processor 54. In a preferred embodiment of the invention, the encoding intervals are centered on the horizontal blanking pulses 38 and have a first width or duration T2 extending about 0.5 microseconds into the overscan intervals 46 on either side of the blanking pulse as shown by the phase reversal of carrier 30 at points 60 in Figure 4A. It will be seen that this results in a pulse width of about 13 microseconds. The phase reversal points 60 of the encoding interval T2 thereby extend into the active video region of the television signal making them extremely difficult to detect with conventional means. The second width or duration T1 of the encoding interval is preferably defined by a pair of phase reversal points 62 respectively located in the front and back porches 40 and 42 of the horizontal blanking pulse as shown in Figure 3A. In particular, the phase reversal points 62 are located about 0.5 microseconds from either edge of the horizontal blanking pulse 38 such that the width of the encoding interval T1 is about 11 microseconds. Thus, in the preferred embodiment of the invention the difference between the two widths T1 and T2 of the encoding intervals is about 2 microseconds although satisfactory operation has been achieved with differences as small as 1 microsecond. It has been found that centering the encoding interval with respect to the horizontal blanking pulse helps reduce audio buzz in the reproduced signal.

The scrambled and data encoded video IF signal (Figures 3A and 4A) produced at the output of RF switch 26 is combined in summing circuit 18 with the IF audio signal and applied to an RF converter 64. RF converter 64 converts the combined IF signal to a standard RF television frequency for transmission through the cable system.

In this regard, it is to be understood that while the scrambling and data encoding techniques of the invention have been described in relation to IF signals, the scrambling and data encoding could just as easily have been performed in connection with the transmitted channel frequency at the output of converter 64. Thus, as used herein, the term RF frequency is considered to include both the IF frequency as well as the transmitted channel frequency.

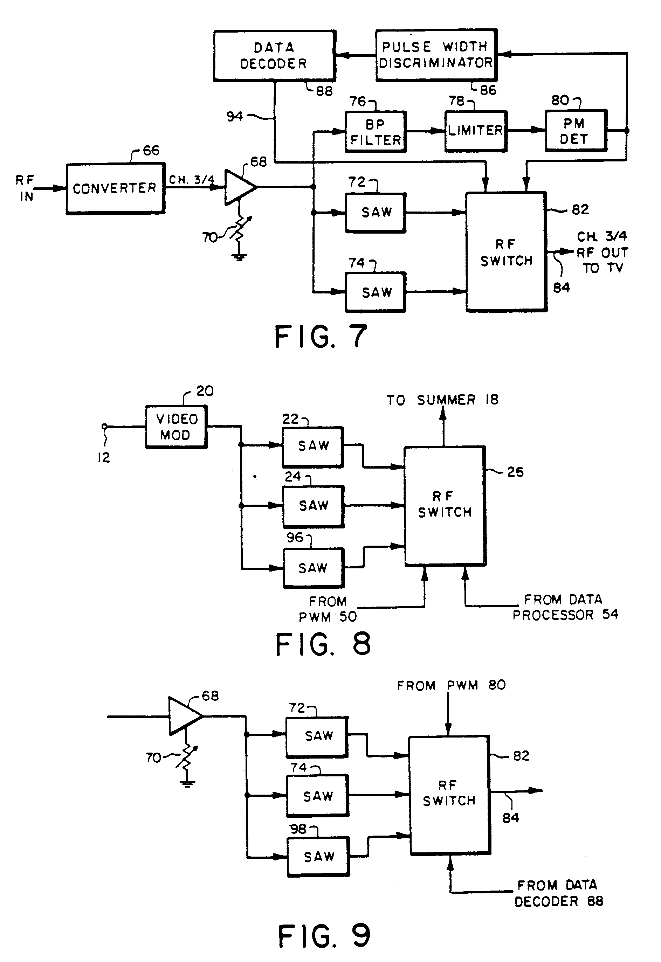

Figure 7 illustrates a preferred embodiment of a decoder adapted to unscramble and decode the data in the transmitted signal. The decoder comprises an RF converter 66 which receives the transmitted signal and converts it to the frequency of, for example, either channel 3 or 4. Assuming conversion to channel 3 frequency, the converted channel 3 signal is coupled through an amplifier 68, whose gain is controlled by a potentiometer 70, to the inputs of a SAW filter 72, a SAW filter 74 and a bandpass filter 76. The output of bandpass filter 76 is coupled through a limiter 78 to the input of a phase modulation detector 80 whose output controls an RF switch 82 for selectively coupling either the output of SAW filter 72 or the output of SAW filter 74 to an output line 84 for application to the subscriber's television receiver.

Figure 5B illustrates the amplitude and normalized phase versus frequency response characteristics 71 and 73 of SAW filter 72 at channel 3 frequencies. It will be seen that these response characteristices are the complements of the corresponding characteristics 51 and 53 of SAW filter 22 (Figure 5A). Thus, the amplitude response 71 of filter 72 varies from +6 db at the channel 3 picture carrier toward 0 db at the channel 3 sound carrier in a manner complementary to the amplitude response characteristic 51 of SAW filter 22. Similarly, the normalized phase response 73 of filter 72 varies from a +180 degrees at the channel 3 picture carrier toward zero degrees at the channel 3 sound carrier in a manner complementary to the phase response characteristic 53 of SAW filter 22. It will be understood that SAW filter 72 may include suitable gain circuitry to achieve the depicted amplitude response characteristic. The amplitude and normalized phase versus frequency response characteristics 75 and 77 of SAW filter 74 are shown in Figure 6B and will be seen to comprise flat responses at 0 db and 0 degrees respectively between the channel 3 picture and sound carriers. Also, both SAW filters 72 and 74 have average delays matched to each other.

In view of the foregoing, it will be appreciated that the received signal can be unscrambled by the decoder by operating RF switch 82 for coupling the output of SAW filter 72 to output line 84 during each encoding interval T1 and T2 and otherwise coupling the output of SAW filter 74 to output line 84. Due to the complementary nature of the response characteristics of SAW filters 22 and 72, this will result in the restoration tion of the amplitude and phase of the received signal during the encoding intervals such that the output of RF switch 82 will correspond to the standard NTSC waveform illustrated in Figure 2A.

As mentioned previously, the operation of RF switch 82 is controlled by phase modulation detector 80 which, in a preferred embodiment of the invention comprises a bi-phase stable phase modulation detector of the type taught in U.S. Patent US-A-4,072,909. Bandpass filter 76, which also preferably comprises a SAW filter, has a relatively narrow response for coupling the channel 3 picture carrier to the input of limiter 78. Limiter 78 removes the amplitude modulation from the channel 3 picture carrier and applies the resulting amplitude limited signal to the input of phase modulation detector 80. Detection by phase modulation detector 80 is effected by a vector multiplication process whereby the applied carrier signal is multiplied with a fixed phase reference signal. As a result, the amplitude limited channel 3 picture carrier applied to detector 80 will produce a detected signal exhibiting a phase reversal during each encoding interval T1 or T2 as represented by the "super-white" level (i.e., a level above the zero carrier axis 32) pulses 90 and 92 in Figures 3B and 4B. Detected pulse 92 corresponds to the wider encoding interval T2 characterizing a received signal of the type shown in Figure 4A while detected pulse 90 corresponds to the narrower encoding interval T1 characterizing a received signal of the type shown in Figure 3A.

The detected signals illustrated in Figures 3B and 4B produced at the output of phase modulation detector 80 are applied for controlling the operation of RF switch 82. In particular, when the detected signal is characterized by a low level, the output of SAW filter 74 is switched to output 84. However, in response to a pulse 90 or 92, the output of SAW filter 72 is switched to output 84 for the duration of the pulse. As previously explained, this operation of RF switch 82 will effectively unscramble the received signal.

The detected signals developed at the output of phase modulation detector 80 are also applied to the input of a pulse width discriminator 86. Pulse width discriminator 86 is responsive to the width of pulses 90 and 92 for coupling complementary state logic signals to the input of a data decoder 88. For example, pulse width discriminator 86 may couple a logic "1" data bit to data decoder 88 in response to a relatively wide pulse 92 and a logic "0" data bit in response to a narrow pulse 90. Data decoder 88 decodes these data bits for controlling various aspects of the decoder. For example, the decoded data bits may represent a data message deauthorizing the decoder in which case an appropriate signal may be applied over a conductor 94 for disabling RF switch 82. Of course, numerous other aspects of the decoder could be controlled in a similar manner.

Figures 8 and 9 illustrate alternate embodiments of the headend unit and decoder depicted in Figures 1 and 7 which provide for an increased level of signal scrambling. Referring to Figure 8, it will be seen that the headend unit 10 has been modified by adding a third SAW filter 96 in parallel with SAW filters 22 and 24 and by coupling an output of data processor 54 to RF switch 26. SAW filter 96 has the amplitude and normalized phase versus frequency response characteristics 91 and 93 shown in dotted-line in Figure 5A. It will be seen that the amplitude response 91 is similar to that of SAW filter 22 except that it has been displaced downwardly with the attenuation at the IF picture carrier frequency being -10 db instead of -6 db. The normalized phase response 93, on the other hand, has been folded over the zero degree axis such that the 180 degree phase reversal at the IF picture carrier frequency is retained. RF switch 26 is responsive to a control signal from data processor 54 for causing the switch to select either the output of SAW filter 22 or the output of SAW filter 96 for coupling to summing circuit 18 during the encoding intervals T1 and T2. The scrambling effect produced by the selection of either filter 22 or 96 during the encoding intervals will be similar except that a greater amount of attenuation and the opposite polarity phase alteration will result when filter 96 is selected instead of filter 22.

It will be appreciated that the foregoing operation of headend unit 10 results in a dynamic system having multiple scrambling modes which can be established by selectively switching between SAW filters 22 and 96 during encoding intervals T1 and T2. For example, the output of SAW filter 22 may be coupled to summer 18 during encoding intervals T1 and T2 for a given period of time after which the output of SAW filter 96 is coupled to summer 18 during encoding intervals T1 and T2 for another given period of time, and so on. RF switch 26 couples the output of either SAW filter 22 or SAW filter 96 to summer 18 during encoding intervals T1 and T2 in accordance with a control signal from data processor 54. In addition, data processor 54 generates and couples an appropriate mode select data message to pulse width modulator 50 defining which of filters 22 or 96 has been selected. This mode select data message is converted by pulse width modulator 50 to a corresponding sequence of pulses 90 and 92 to effect the transmission of the data message to the system decoders by modulating the width of the encoding intervals as previously described. In this way, the decoders may be instructed as to whether the output of SAW filter 22 or the output of SAW filter 96 is being transmitted during the encoding intervals.

Referring to Figure 9, it will be observed that the decoder has been modified by adding a third SAW filter 98 whose amplitude and normalized phase versus frequency response characteristics 81 and 83 are complementary to those of SAW filter 96 as illustrated in dotted-line in Figure 5B. Data decoder 88, in response to a received mode select data message from headend unit 10, couples a control signal to RF switch 82 for selecting the output of the appropriate one of SAW filters 72 and 98 during the encoding intervals for application to output 84. That is, in the dynamic mode, data decoder 88 is responsive to received mode select data messages for causing the output of SAW filter 82 to be applied to conductor 84 whenever SAW filter 22 is being used at the headend and for causing the output of SAW filter 98 to be applied to conductor 84 whenever SAW filter 96 is being used at the headend.

## Claims

1. A television signal encoding and data transmission system including means for developing an RF television signal having an amplitude modulated RF video component and a frequency modulated RF audio component, means (10) for encoding said RF television signal, means (64) for transmitting said encoded RF television signal, means (66) for receiving said transmitted signal, phase modulation detection means (80), and decoding means (72, 74, 82) for restoring said RF television signal, said system characterized by means (50, 54) for defining, during each horizontal blanking interval, an encoding interval having a first width or a second width, respectively representing different states of a data bit, each of said encoding intervals including at least the horizontal sync pulse and color burst of the respective horizontal blanking interval; said encoding means incorporating means (22, 24, 26) for varying the amplitude and altering the phase of the video component of said RF television signal during said encoding intervals according to respective predetermined functions that vary with frequency between the carrier frequencies of said video and audio components so as to effectively scramble said video component; said phase modulation detection means (80) responsive to said received signals for detecting said width modulated encoding intervals; said decoding means (72, 74, 78) responsive to said detected intervals and having amplitude and phase response characteristics complementary to said predetermined functions for restoring said RF television signal; and pulse width discriminator means (86) responsive to said detected width modulated encoding intervals for deriving said data bits in terms of said different logic states.

2. The system of claim 1, characterized in that said defining means (50, 54) is capable of developing said encoding intervals symmetrically about the center of said horizontal blanking intervals with at least some of said encoding intervals extending into the non-viewable, overscan portions of the video lines on either side thereof.

3. The system of claim 1, characterized in that said phase modulation detection means comprises a bi-phase stable phase modulation detector (80).

4. The system of claim 1, characterized in that said means (22, 24, 26) for varying comprises means (22) for varying the amplitude of said television signal during said encoding intervals according to a first function characterized by a first predetermined attenuation at the carrier frequency of said video component and a second different predetermined attenuation at the carrier frequency of said audio component and means (22) for altering its phase according to a second function characterized by a first predetermined normalized phase shift at the carrier frequency of said video component and a second different predetermined normalized phase shift at the carrier frequency of said audio component.

5. The system of claim 4, characterized in that said means (22, 24, 26) for varying comprises a first filter (22) having a given delay and amplitude and normalized phase versus frequency response characteristics comprising said first and second functions, a second filter (24) having said given delay and substantially flat amplitude and normalized phase versus frequency response characteristics, means (20) for coupling said RF video component to the inputs of said first and second filters (22, 24), and means (26) for selecting the output of said first filter for transmission during said encoding intervals and otherwise selecting the output of said second filter for transmission.

6. The system of claim 5, characterized in that said decoding means (72, 74, 82) comprises a third filter (72) having a selected delay and having amplitude and normalized phase versus frequency response characteristics comprising complements of said first and second functions respectively, a fourth filter (74) having said selected delay and having substantially flat amplitude and normalized phase versus frequency response characteristics, and switching means (82) responsive to said detected encoding intervals for coupling the output of said third filter (72) and otherwise coupling the output of said fourth filter (72).

7. The system of claim 5 or 6, characterized in that said first, second, third and fourth filters (22, 24, 72, 74) each comprise a respective SAW filter.

8. The system of claim 6, characterized in that said means (22, 24, 26) for varying comprises a fifth filter (96) having said given delay and amplitude and normalized phase versus frequency response characteristics that vary with frequency between the carrier frequencies of said video and audio components in a manner different from said first and second functions with the normalized phase shift at the video carrier frequency being equal in magnitude and of opposite polarity to the normalized phase shift of said first filter (22) at the video carrier frequency, means (20) for coupling said RF video signal to the input of said fifth filter (96), and means (26) for selectively selecting the output of said fifth filter (96) or the output of said first filter (22) for transmission during said encoding intervals.

9. The system of claim 8, characterized in that said decoding means (72, 74, 82) comprises a sixth filter (98) having said selected delay and having amplitude and normalized phase versus frequency response characteristics comprising the complements of the response characteristics of said fifth filter (96), said switching means (82) coupling the output of said sixth filter (98) in response to the transmission of the output of said fifth filter (96).

10. The system of claim 4, characterized in that said first and second predetermined attenuations comprise a first non-zero level of attenuation and about zero db respectively and wherein said first and second normalized phase shifts comprise about 180 and zero degrees respectively.

11. The system of claim 4, characterized in that said first function is characterized by a second relatively small non-zero level at attenuation less than said first non-zero level at the chroma subcarrier frequency of said RF television signal and wherein said second function is characterized by a relatively small non-zero value of normalized phase shift less than 180 degrees at the chroma subcarrier frequency.

12. A receiver for processing an encoded RF television signal having an RF video component whose amplitude and phase are altered during a plurality of encoding intervals according to respective first and second functions that vary with frequency between the carrier frequencies of the video and audio components of said RF television signal, said receiver including means (66) for receiving said encoded television signal, phase modulation detection means (80), and decoding means (72, 74, 82) for restoring said RF television signal, characterized by said phase modulation detection means (80) responsive to said received signal for detecting said encoding intervals having a first width or a second width respectively representing complementary states of a data bit and each including at least the horizontal sync pulse and colour burst of a respective horizontal blanking interval; said decoding means (72, 74, 82) responsive to said detected intervals and having amplitude and phase response characteristics respectively comprising the complements of said first and second functions for decoding said RF television signal; and pulse width discriminator means (86) responsive to said detected width modulated encoding intervals for deriving said data bits in terms of said complementary logic states.

13. The receiver of claim 12, wherein said first and second functions respectively comprise functions that vary between a predetermined attenuation and a 180 degree phase shift at the video component carrier frequency and substantially zero attenuation and zero phase shift at the audio component carrier frequency, characterized in that said decoding means (72, 74, 82) includes a first filter (72) having a selected delay and having amplitude and phase versus frequency response characteristics comprising the complements of said first and second functions respectively, a second filter (74) having said selected delay and having substantially flat amplitude and phase versus frequency response characteristics, means (68) for coupling said received signal to the inputs of said first and second filters (72, 74), an output terminal (84), and means (82) responsive to said detected intervals for coupling the output of said first filter to said output terminal (84) and otherwise coupling the output of said second filter to said output terminal (84).

14. The receiver of claim 12, characterized in that said phase modulation detection means (80) comprises a bi-phase stable phase modulation detector.

15. The receiver of claim 13, characterized in that said first and second filters (72, 74) each comprise a respective SAW filter.

## Revendications

1. Un système d'encodage de signaux de télévision et de transmission de données comprenant un moyen pour développer un signal de télévision RF comprenant une composante vidéo RF modulée en amplitude et une composante audio RF modulée en fréquence, un moyen (10) pour encoder ledit signal de télévision RF, un moyen (64) pour transmettre ledit signal de télévision RF encodé, un moyen (66) pour recevoir ledit signal transmis, un moyen (80) de détection de modulation de phase, et un moyen (72, 74, 82) de décodage pour restaurer ledit signal de télévision RF, ledit système étant caractérisé par un moyen (50, 54) pour définir, pendant chaque intervalle horizontal de suppression, un intervalle d'encodage comportant une première largeur ou une deuxième largeur, représentant respectivement différents états d'un bit de données, chacun desdits intervalles d'encodage comprenant au moins l'impulsion horizontale sinoc et le signal de chrominance de couleur de l'intervalle horizontal respectif de suppression; ledit moyen d'encodage incorporant un moyen (22, 24, 26) pour faire varier l'amplitude et modifier la phase de la composante vidéo dudit signal de télévision RF pendant lesdits intervalles d'encodage selon des fonctions respectives prédéterminées qui varient avec la fréquence entre les fréquences de porteuses desdites composantes vidéo et audio, de façon à brouiller effectivement ladite composante vidéo; ledit moyen (80) de détection de modulation de phase étant sensible auxdits signaux reçus pour détecter lesdits intervalles d'encodage modulés en largeur; ledit moyen de décodage (72, 74, 78) étant sensible auxdits intervalles détectés et présentant des caractéristiques de réponse d'amplitude et de phase complémentaires desdites fonctions prédéterminées pour restaurer ledit signal de télévision RF; et un moyen discriminant (86) de largeur d'impulsion sensible auxdits intervalles détectés d'encodage modulés en largeur pour dériver lesdits bits de données en terme desdits états logiques différents.

2. Le système selon la revendication 1, caractérisé en ce que ledit moyen de définition (50, 54) est susceptible de développer lesdits intervalles d'encodage de façon symétrique autour du centre desdits intervalles horizontaux de suppression, au moins certains desdits intervalles d'encodage s'étendant sur chacun de leurs côtés dans des parties non visibles de recouvrement de balayage des lignes vidéo.

3. Le système de la revendication 1, caractérisé en ce que ledit moyen de détection de modulation de phase comprend un détecteur (80) de modulation de phase à deux phases stables.

4. Le système selon la revendication 1, caractérisé en ce que ledit moyen (22, 24, 26) de variation comprend un moyen (22) pour faire varier l'amplitude dudit signal de télévision pendant lesdits intervalles d'encodage selon une première fonction caractérisée par une première atténuation prédéterminée à la fréquence de porteuse de ladite composante vidéo et une deuxième atténuation différente prédéterminée à la fréquence de porteuse de ladite composante audio et un moyen (22) pour modifier sa phase selon une deuxième fonction caractérisée par un premier déphasage normalisé prédéterminé à la fréquence de porteuse de ladite composante vidéo et un deuxième déphasage normalisé prédéterminé différent à la fréquence de porteuse de ladite composante audio.

5. Le système selon la revendication 4, caractérisé en ce que ledit moyen (22, 24, 26) de variation comprend un premier filtre (22) présentant un retard donné et des caractéristiques d'amplitude et de réponse normalisée de phase en fonction de la fréquence, comprenant lesdites première et deuxième fonctions, un deuxième filtre (24) présentant ledit retard donné et une amplitude sensiblement plate et des caractéristiques de réponse normalisée de phase en fonction de la fréquence, un moyen (20) de couplage de ladite composante vidéo RF aux entrées desdits premier et deuxième filtres (22, 24) et un moyen (26) pour choisir pendant lesdits intervalles d'encodage la sortie dudit premier filtre pour la transmettre et pour choisir pendant les autres périodes la sortie dudit deuxième filtre pour la transmettre.

6.  Le système selon la revendication 5, caractérisé en ce que ledit moyen de décodage (72, 74, 82) comprend un troisième filtre (72) présentant un retard choisi et présentant des caractéristiques d'amplitude et de réponse normalisée de phase en fonction de la fréquence comprenant des compléments desdites première et deuxième fonctions respectivement, un quatrième filtre (74) présentant ledit retard choisi et présentant des caractéristiques d'amplitude et de réponse normalisée de phase en fonction de la fréquence sensiblement plates, et un moyen de commutation (82) sensible auxdits intervalles détectés d'encodage pour coupler la sortie dudit troisième filtre (72) et couplant pendant les autres périodes la sortie dudit quatrième filtre (74).

7.  Le système selon la revendication 5 ou 6, caractérisé en ce que lesdits premier, deuxième, troisième et quatrième filtres (22, 24, 72, 74) comprennent chacun un filtre respectif SAW.

8.  Le système selon la revendication 6, caractérisé en ce que ledit moyen (22, 24, 26) de variation comprend un cinquième filtre (96) présentant ledit retard donné et des caractéristiques d'amplitude et de réponse normalisée de phase en fonction de la fréquence qui varient avec la fréquence entre les fréquences de porteuse desdites composantes vidéo et/ou audio d'une manière différente desdites première et deuxième fonctions, le déphasage normalisé à la fréquence de porteuse vidéo étant d'amplitude égale et de polarité opposée au déphasage normalisé dudit premier filtre (22) à la fréquence de porteuse de vidéo, un moyen (20) pour coupler ledit signal vidéo RF à l'entrée dudit cinquième filtre (96), et un moyen (26) pour choisir de façon sélective la sortie dudit cinquième filtre (96) ou la sortie dudit premier filtre (22) pour la transmettre pendant lesdits intervalles d'encodage.

9.  Le système selon la revendication 8, caractérisé en ce que ledit moyen de décodage (72, 74, 82) comprend un sixième filtre (98) présentant ledit retard choisi et présentant des caractéristiques d'amplitude et de réponse normalisée de phase en fonction de la fréquence comprenant les compléments des caractéristiques de réponse dudit cinquième filtre (96), ledit moyen commutateur (82) couplant la sortie dudit sixième filtre (98) en réponse à la transmission de la sortie dudit cinquième filtre (96).

10. Le système selon la revendication 4, caractérisé en ce que lesdites première et deuxième atténuations prédéterminées comprennent respectivement un premier niveau non nul d'atténuation et environ zéro dB et dans lequel ledit premier et deuxième déphasages normalisés sont d'environ 180 et zéro degrés respectivement.

11. Le système selon la revendication 4, caractérisé en ce que ladite première fonction est caractérisée par un deuxième niveau relativement faible non nul d'atténuation inférieur audit premier niveau non nul à la fréquence de porteuse de chrominance dudit signal de télévision RF et dans lequel ladite deuxième fonction est caractérisée par une valeur relativement faible non nulle de déphasage normalisé inférieure à 180 degrés à la fréquence de sous-porteuse de chrominance.

12. Un récepteur destiné à traiter un signal de télévision encodé RF comportant une composante vidéo RF dont l'amplitude et la phase sont modifiées pendant plusieurs intervalles d'encodage selon une première et une deuxième fonctions respectives qui varient avec la fréquence entre les fréquences de porteuse des composantes vidéo et audio dudit signal de télévision RF, ledit récepteur comprenant un moyen (66) pour recevoir ledit signal de télévision encodé, un moyen (80) de détection de modulation de phase et un moyen décodeur (72, 74, 82) pour restaurer ledit signal de télévision RF, caractérisé en ce que ledit moyen (80) de détection de modulation de phase est sensible audit signal reçu pour détecter lesdits intervalles de décodage comprenant une première largeur ou une deuxième largeur représentant respectivement des états complémentaires d'un bit de donnée et comprenant chacun au moins l'impulsion horizontale sinoc et le signal de chrominance de couleur d'un intervalle horizontal respectif de suppression; ledit moyen décodeur (72, 74, 80) étant sensible auxdits intervalles détecteurs et présentant des caractéristiques d'amplitude et de réponse de phase comprenant respectivement les compléments de ladite première et de ladite deuxième fonctions pour détecter ledit signal de télévision RF; et un moyen discriminant (86) de largeur d'impulsion sensible auxdits intervalles d'encodage modulés en largeur pour dériver lesdits bits de données en terme desdits états logiques complémentaires.

13. Le récepteur selon la revendication 12, dans lequel ladite première et ladite deuxième fonction comprennent respectivement des fonctions qui varient entre une atténuation prédéterminée et un déphasage de 180 degrés à la fréquence de porteuse de composante vidéo et une atténuation sensiblement nulle et un décalage nul à la fréquence de porteuse de composant audio, caractérisé en ce que ledit moyen décodeur (72, 74, 82) comprend un premier filtre (72) présentant un retard choisi et présentant des caractéristiques d'amplitude et de réponse de phase en fonction de la fréquence comprenant les compléments de ladite première et de ladite deuxième fonctions respectivement, un deuxième filtre (74) présentant ledit retard choisi et présentant des caractéristiques d'amplitude et de réponse de phase en fonction de la fréquence sensiblement places, un moyen (68) pour coupler ledit signal reçu aux entrées dudit premier et dudit deuxième filtres (72, 74), une borne de sortie (84) et un moyen (82) sensible auxdits intervalles détectés pour coupler la sortie dudit premier filtre à ladite borne de sortie (84) et couplant pendant les autres périodes la sortie dudit deuxième filtre à ladite borne de sortie (84).

14. Le récepteur selon la revendication 12, caractérisé en ce que ledit moyen (80) de détection de modulation de phase comprend un détecteur de modulation de phase à deux phases stables.

15. Le récepteur selon la revendication 13, caractérisé en ce que lesdits premier et deuxième filtres (72, 74) comprennent chacun un filtre respectif SAW.

**Patentansprüche**

1. System zum Codieren von Fernsehsignalen und zum Datenübertragen mit einer Einrichtung zum Erzeugen eines HF-Fernsehsignals mit einer amplitudenmodulierten HF-Bildsignalkomponente und einer frequenzmodulierten HF-Tonsignalkomponente, einer Einrichtung (10) zum Codieren des HF-Fernsehsignals, einer Einrichtung (64) zum Senden des codierten HF-Fernsehsignals, einer Einrichtung (66) zum Empfang des gesendeten Signals, einem Phasenmodulationsdetektor (80) und einer Decodiereinrichtung (72, 74, 82) zum Wiederherstellen des HF-Fernsehsignals, wobei das System gekennzeichnet ist durch eine Bestimmungseinrichtung (50, 54), die während jedes Horizontalaustastlücke ein Codierintervall bestimmt, das zur Darstellung verschiedener Zustände eines Datenbits eine erste oder eine zweite Dauer hat, wobei jedes der Codierintervalle mindestens den Horizontalsynchronimpuls und das Farbsynchronsignal der entsprechenden Horizontalaustastlücke beinhaltet, die Codiereinrichtung eine Veränderungseinrichtung (22, 24, 26) zum Verändern der Amplitude und der Phasenlage der Videokomponente des HF-Fernsehsignals während der Codierintervalle entsprechend je einer vorherbestimmten Funktion besitzt, die jeweils frequenzabhängig zwischen den Trägerfrequenzen der Bildsignal- und der Tonsignalkomponente derart variieren, daß die Bildsignalkomponente effektiv verwürfelt wird; wobei der Phasenmodulationsdetektor (80) die dauermodulierten Codierintervalle erfaßt; die Decodiereinrichtung (72, 74, 78) auf die erfaßten Intervalle anspricht und einen solchenden genannten vorherbestimmten Funktionen komplementäre Frequenzgänge der Amplitude bzw. Phasenlage hat, daß das HF-Fernsehsignal wiederhergestellt wird; und durch einen Impulsdauerdiskriminator (66), der in Abhängigkeit von den erfaßten dauermodulierten Codierintervallen die Datenbits mit ihren unterschiedlichen Logikzuständen ableitet.

2. System nach Anspruch 1, dadurch gekennzeichnet, daß die Bestimmungseinrichtung (50, 54) geeignet ist, die Codierintervalle 90 zu bestimmen, daß sie in Bezug auf die Mitte der Horizontalaustastlücken symmetrisch sind und mindestens einige der Codierintervalle sich auf beiden Seiten bis in die nicht sichtbaren, nutzflächenüberschreitenden Teile der Videozeilen erstrecken.

3. System nach Anspruch 1, dadurch gekennzeichnet, daß der Phasenmodulationsdetektor einen zweiphasenstabilen Phasenmodulationsdetektor (80) umfaßt.

4. System nach Anspruch 1, dadurch gekennzeichnet, daß die Veränderungseinrichtung (22, 24, 26) eine Einrichtung zum Verändern der Amplitude des Fernsehsignals während der Codierintervalle gemäß einer ersten Funktion aufweist, die durch eine erste vorherbestimmte Schwächung bei der Trägerfrequenz der Bildsignalkomponente und eine unterschiedliche, zweite vorherbestimmte Schwächung bei der Trägerfrequenz der Tonsignalkomponente gekennzeichnet ist, sowie eine Einrichtung zum Ändern der Phasenlage des Fernsehsignals nach einer zweiten Funktion, die gekennzeichnet ist durch eine erste vorherbestimmte normierte Phasenverschiebung bei der Trägerfrequenz der Bildsignalkomponente und eine unterschiedliche zweite vorherbestimmte normierte Phasenverschiebung bei der Trägerfrequenz der Tonsignalkomponente.

5.  System nach Anspruch 4, dadurch gekennzeichnet, daß die Veränderungseinrichtung (22, 24, 26) ein erstes Filter (22) mit einer gegebenen Laufzeit und der genannten ersten und zweiten Frequenz entsprechenden Frequenzgängen der Amplitude bzw. der normierten Phasenlage aufweist, Ferner ein zweites Filter (24), das die genannte Laufzeit hat und das im wesentlichen lineare Frequenzgänge der Amplitude bzw. der normierten Phasenlage aufweist,ferner ein zweites Filter (24), das die genannte Laufzeit hat und das imwesentlichen lineare Frequenzgänge der Amplitude bzw. der normierten Phasenlage hat, eine Einrichtung (20) zum Ankoppeln der HF-Bildsignalkomponente an die Eingänge des ersten und des zweiten Filters (22, 24) und eine Einrichtung (26) zur Auswahl des Ausgangssignals des ersten Filters zum Senden während der Codierintervalle und zur Auswahl des Ausgangssignals des zweiten Filters zum Senden während anderer Zeiten.

6.  System nach Anspruch 5, dadurch gekennzeichnet, daß die Codiereinrichtung (72, 74, 82) ein drittes Filter (72) besitzt, das eine ausgewählte Laufzeit und Komplementen der ersten und der zweiten Funktion entsprechende Frequenzgänge der Amplitude und der normierten Phasenlage hat, ferner ein viertes Filter (74), das die genannte ausgewählte Laufzeit und im wesentlichen lineare Frequenzgänge der Amplitude bzw. der normierten Phasenlage hat, und eine Schalteinrichtung (82), die auf Grund der erfaßten Codierintervalle das Ausgangssignal des dritten Filters (72) und sonst das Ausgangssignal des vierten Filters (72) ankoppelt.

7.  System nach Anspruch 4 oder 6, dadurch gekennzeichnet, daß das erste, zweite, dritte und vierte Filter (22, 24, 72, 74) je ein Oberflächenwellenfilter besitzen.

8.  System nach Anspruch 6, dadurch gekennzeichnet, daß die Veränderungseinrichtung (22, 24, 26) ein fünftes Filter (96) besitzt, das die genannte Laufzeit und Frequenzgänge der Amplitude bzw. der normierten Phasenlage hat, die sich zwischen den Trägerfrequenzen der Bild- und der Tonsignalkomponente frequenzabhängig in anderer Weise ändern als die erste und die zweite Funktion, wobei die normierte Phasenverschiebung des fünften Filters (96) bei der Bildsignal-Trägerfrequenz mit der normierten Phasenverschiebung des ersten Filters (22) bei der Bildsignal-Trägerfrequenz betragsgleich, aber ihr gegenpolig ist, ferner eine Einrichtung (20) zum Ankoppeln des HF-Bildsignals an den Eingang des fünften Filters (96) und eine Einrichtung (26) zur selektiven Auswahl des Ausgangssignals des fünften Filters (96) oder des Ausgangssignals des ersten Filters (22) zum Senden während der Codierintervalle.

9.  System nach Anspruch 8, dadurch gekennzeichndet, daß die Decodiereinrichtung (72, 74, 82) ein sechstes Filter (98) besitzt, das die genannte ausgewählte Laufzeit hat und das Komplementen der Frequenzgänge des fünften Filters (96) entsprechende Frequenzgänge der Amplitude bzw. der normierten Phasenlage hat, wobei die Schalteinrichtung (82) das Ausgangssignal des sechsten Filters (98) auf Grund des Sendens des Ausgangssignals des fünften Filters (96) ankoppelt.

10.  System nach Anspruch 4, dadurch gekennzeichnet, daß die erste und die zweite vorherbestimmte Schwächung aus einer Schwächung auf einen ersten von null verschiedenen Pegel bzw. einer Schwächung um etwa null dB bestehen und daß die erste und die zweite normierte Phasenverschiebung etwa 180 Grad bzw. null Grad betragen.

11.  System nach Anspruch 4, dadurch gekennzeichnet, daß die erste Funktion bei der Farb-Hilfsträgerfrequenz des HF-Fernsehsignals durch eine Schwächung auf einen zweiten von null abweichenden Pegel gekennzeichnet ist, der niedriger ist als der erste von null abweichende Pegel, und daß die zweite Funktion beider Farb-Hilfsträgerfrequenz gekennzeichnet ist durch eine normierte Phasenverschiebung um einen relativ kleinen von null abweichenden Betrag von weniger als 180 Grad.

12.  Empfänger zum Verarbeiten eines codierten HF-Fernsehsignals mit einer HF-Bildsignalkomponente, deren Amplitude und Phasenlage während einer Mehrzahl von Codierintervallen nach einer ersten bzw. zweiten Funktion variieren, die sich frequenzabhängig zwischen den Trägerkomponenten der Bild- bzw. der Tonsignalkomponente des HF-Fernsehsignals ändern, wobei der Empfänger eine Einrichtung (66) zum Empfang des codierten Fernsehsignals besitzt, ferner einen Phasenmodulationsdetektor (80) und eine Decodiereinrichtung (72, 74, 82) zum Wiederherstellen des HF-Fernsehsignals, dadurch gekennzeichnet, daß der Phasenmodulationsdetektor (80) auf Grund des empfangenen Signals die Codierintervalle erfaßt, die eine erste Dauer oder eine zweite Dauer haben, die komplementäre Zustände eines Datenbits darstellen und jeweils mindestens den Horizontalsynchronimpuls und das Farbsynchronsignal des entsprechenden Horizontalaustastlücke enthalten, wobei die Decodiereinrichtung (72, 74, 82) zum Decodieren des HF-Fernsehsignals dient und auf die erfaßten Intervalle anspricht und Komplementen der ersten und der zweiten Funktion entsprechende Frequenzgänge der Amplitude und der Phasenlage hat; ferner einen Impulsdauerdiskriminator (86), der auf Grund der erfaßten dauermodulierten Codierintervalle die Datenbits mit den genannten, komplementären Logikzuständen ableitet.

13. Empfänger nach Anspruch 12, dadurch gekennzeichnet, daß die erste und die zweite Funktion jeweils einer Funktion entsprechen, die zwischen einer vorherbestimmten Schwächung und einer Phasenverschiebung von 180 Grad bei der Trägerfrequenz der Bildsignalkomponente und einer Schwächung von im wesentlichen null und der Phasenverschiebung null bei der Trägerfrequenz der Tonsignalkomponente variieren, dadurch gekennzeichnet, daß die Decodiereinrichtung (72, 74, 82) ein erstes Filter (72) besitzt, das eine ausgewählte Laufzeit und Komplementen der ersten und der zweiten Funktion entsprechende Frequenzgänge der Amplitude und der normierten Phasenlege hat, ferner ein zweites Filter (74), das die genannte ausgewählte Laufzeit und im wesentlichen lineare Frequenzgänge der Amplitude bzw. der normierten Phasenlege hat, eine Einrichtung (68) zum Ankoppeln des empfangenen Signals an die Eingänge des ersten und des zweiten Filters (72, 74), einen Ausgangsanschluß (84) und eine Einrichtung (82), die auf Grund der erfaßten Intervalle den Ausgang des ersten Filters an den Ausgangsanschluß (84) ankoppelt und sonst den Ausgang des zweiten Filters an den Ausgangsanschluß (84) ankoppelt.

14. Empfänger nach Anspruch 12, dadurch gekennzeichnet, daß der Phasenmodulationsdetektor (80) einen zweiphasenstabilen Phasenmodulationsdetektor aufweist.

15. Empfänger nach Anspruch 13, dadurch gekennzeichnet, daß das erste und das zweite Filter (72, 74) ein Oberflächenwellenfilter aufweisen.

FIG. 1

RF OUT

AUDIO 14

VIDEO 12

AUDIO MODULATOR 16

VIDEO MODULATOR 20

RF CONVERTER 64

18

RF SWITCH 26

SAW 22

SAW 24

10

DATA

DATA PROCESSOR 54

D
FC

PWM 50

H
V

TIMING GENERATOR 52

V
H

14

FIG. 2a

FIG. 2b

FIG. 3a

FIG. 3b

FIG. 4a

FIG. 4b

FIG. 5a

FIG. 5b

FIG. 6a

FIG. 6b

FIG. 7

FIG. 8

FIG. 9